# EUROPEAN PATENT APPLICATION

(11) **EP 4 322 590 A1**
(43) Date of publication of application: **14.02.2024**
(21) Application number: 22783983.4
(22) Date of filing: 02.04.2022
(51) Int. Cl.: H04W 24/02, H04W 56/00, H04W 72/04, H04L 5/00

(54) **SECONDARY CELL ACTIVATION METHOD AND APPARATUS, AND STORAGE MEDIUM, TERMINAL AND NETWORK DEVICE**

(30) Priority: 06.04.2021 CN 202110369438
(71) Applicant: Beijing Unisoc Communications Technology Co., Ltd., Beijing 100083 (CN)
(72) Inventor: ZHOU, Huan, Shanghai 201203 (CN); MA, Dawei, Shanghai 201203 (CN); WANG, Hualei, Shanghai 201203 (CN)
(74) Representative: Nordmeyer, Philipp Werner
(86) International application number: PCT/CN2022/085003
(87) International publication number: WO 2022/213917

(57) **Abstract**

A secondary cell activation method and apparatus, and a storage medium, a terminal and a network device. The method comprises: receiving a message for activating a secondary cell (SCell) and a message for activating a TRS, wherein the TRS corresponds to one or more first bursts and one or more second bursts, and there is a time-domain interval between the first burst and the second burst; receiving the TRS to perform AGC adjustment and finer synchronization; and activating the SCell. Thus, the SCell activation method is provided, wherein in the method, a configuration method for a TRS pattern required when a LTE performs SCell activation is triggered to assist the UE in quickly realizing SCell activation. The SCell activation method can be adapted to the conditions of SCells in different scenarios, such that a delay of SCell activation is shortened to improve the utilization rate of resources.

## Description

### CROSS-REFERENCE TO RELATED APPLICATIONS

This application claims priority to Chinese Patent Application No. 202110369438.7, filed on April 6, 2021, and entitled "SECONDARY CELL ACTIVATION METHOD AND APPARATUS, AND STORAGE MEDIUM, TERMINAL AND NETWORK DEVICE", the entire disclosure of which is incorporated herein by reference.

### TECHNICAL FIELD

The present disclosure generally relates to communication field, and more particularly, to a secondary cell activation method and apparatus, a storage medium, a terminal and a network device.

### BACKGROUND

With carrier aggregation technology, multiple consecutive or discrete Long Term Evolution (LTE) system carriers can be expanded into a carrier meeting requirements of an LTE-Advanced system. AUser Equipment (UE) may be configured to receive and transmit data in multiple cells including a Primary Cell (PCell) and multiple Secondary Cells (SCells). The secondary cells are mainly responsible for providing additional radio resources for data transmission, and may be in an activated or deactivated state.

A base station can manage the state of the secondary cells according to a practical situation, so that the radio resources of the system can be utilized more effectively, and throughput of the system can be improved. For example, the base station can temporarily deactivate a certain secondary cell of the UE to reduce consumption of the radio resources, and can quickly resume the secondary cell to the activated state when the UE has a need so as to increase a data transmission rate. When the secondary cell is in the activated state, it consumes more power of the UE. Therefore, appropriately deactivating the secondary cell can save power consumption of the UE to a certain extent and help to prolong a usage time of the UE. However, a delay of SCell activation in existing techniques is too long, resulting in a waste of resources.

### SUMMARY

Embodiments of the present disclosure may reduce a delay of SCell activation to improve resource utilization.

In an embodiment of the present disclosure, a secondary cell activation method is provided, including: receiving a message for activating one or more secondary cells and a message for activating a Tracking Reference Signal (TRS), wherein the TRS corresponds to one or more first bursts and one or more second bursts, and a time-domain gap exists between the first burst and the second burst; receiving the TRS for AGC adjustment and finer synchronization; and activating the one or more secondary cells.

Optionally, said receiving the TRS includes: receiving the TRS based on configuration information of the TRS, wherein the configuration information of the TRS includes at least one or more of following parameters: a number of the one or more first bursts, a number of the one or more second bursts, or length of the time-domain gap.

Optionally, the number of the one or more first bursts, the number of the one or more second bursts, and the length of the time-domain gap are preset values.

Optionally, prior to receiving the message for activating the one or more secondary cells and the message for activating the TRS, the method further includes: receiving the configuration information of the TRS, wherein the configuration information of the TRS includes the number of the one or more first bursts and the number of the one or more second bursts.

Optionally, the configuration information of the TRS further includes the length of the time-domain gap.

Optionally, the configuration information of the TRS includes configuration information of a Channel State Information Reference Signal (CSI-RS) resource set, and said receiving the configuration information of the TRS includes: receiving the configuration information of the CSI-RS resource set; determining the number of the one or more first bursts based on a number of CSI-RS resources in the configuration information of the CSI-RS resource set.

Optionally, the configuration information of the CSI-RS resource set further indicates the number of the one or more second bursts and/or the time-domain gap.

Optionally, the configuration information of the CSI-RS resource set includes a start slot of a burst following the time-domain gap and the number of the CSI-RS resources in the CSI-RS resource set, and following receiving the configuration information of the CSI-RS resource set, the method further includes: determining the number of the one or more second bursts based on the number of the CSI-RS resources; and determining the length of the time-domain gap based on the start slot of the burst following the time-domain gap and the number of the CSI-RS resources.

Optionally, the configuration information of the TRS is carried by Media Access Control Control Element (MAC CE).

Optionally, the message for activating the one or more secondary cells is carried through a first MAC CE, and the message for activating the TRS is carried through a second MAC CE; wherein the second MAC CE includes a CSI-RS resource set identity and an identity of an associated serving cell.

Optionally, the second MAC CE further includes the number of the one or more first bursts and/or the number of the one or more second bursts.

Optionally, the second MAC CE further includes a transmission configuration indication identity and/or a bandwidth identity; wherein the transmission configuration indication identity is associated with a CSI-RS resource or a Synchronization Signal Block (SSB).

Optionally, the message for activating the one or more secondary cells and the message for activating the TRS are carried through a third MAC CE.

Optionally, the third MAC CE includes information about one or more activated secondary cells and identities of CSI-RS resource sets sequentially associated with each of the one or more activated secondary cells.

Optionally, the third MAC CE further includes the number of the one or more first bursts and/or the number of the one or more second bursts.

Optionally, the third MAC CE further includes a transmission configuration indication identity and/or a bandwidth identity; wherein the transmission configuration indication identity is associated with a CSI-RS resource or an SSB.

In an embodiment of the present disclosure, a secondary cell activation method is provided, including: transmitting to a terminal a message for activating one or more secondary cells and a message for activating a TRS, to make the terminal receive the TRS for AGC adjustment and finer synchronization and activate the one or more secondary cells; wherein the TRS corresponds to one or more first bursts and one or more second bursts, and a time-domain gap exists between the first burst and the second burst.

Optionally, the terminal receives the TRS based on configuration information of the TRS, wherein the configuration information of the TRS includes at least one or more of following parameters: a number of the one or more first bursts, a number of the one or more second bursts, or length of the time-domain gap.

Optionally, the number of the one or more first bursts, the number of the one or more second bursts, and the length of the time-domain gap are preset values.

Optionally, prior to transmitting to the terminal the message for activating the one or more secondary cells and the message for activating the TRS, the method further includes: transmitting to the terminal the configuration information of the TRS, wherein the configuration information of the TRS includes the number of the one or more first bursts and the number of the one or more second bursts.

Optionally, the configuration information of the TRS further includes the length of the time-domain gap.

Optionally, the configuration information of the TRS includes configuration information of a CSI-RS resource set, and said transmitting to the terminal the configuration information of the TRS includes: transmitting to the terminal the configuration information of the CSI-RS resource set, to make the terminal determine the number of the one or more first bursts based on a number of CSI-RS resources in the configuration information of the CSI-RS resource set.

Optionally, the configuration information of the CSI-RS resource set further indicates the number of the one or more second bursts and/or the time-domain gap.

Optionally, the configuration information of the CSI-RS resource set includes a start slot of a burst following the time-domain gap and the number of the CSI-RS resources in the CSI-RS resource set, to make the terminal determine the number of the one or more second bursts based on the number of the CSI-RS resources, and determine the length of the time-domain gap based on the start slot of the burst following the time-domain gap and the number of the CSI-RS resources, after receiving the configuration information of the CSI-RS resource set.

Optionally, the configuration information of the TRS is carried by MAC CE.

Optionally, the message for activating the one or more secondary cells is carried through a first MAC CE, and the message for activating the TRS is carried through a second MAC CE; wherein the second MAC CE includes a CSI-RS resource set identity and an identity of an associated serving cell.

Optionally, the second MAC CE further includes the number of the one or more first bursts and/or the number of the one or more second bursts.

Optionally, the second MAC CE further includes a transmission configuration indication identity and/or a bandwidth identity; wherein the transmission configuration indication identity is associated with a CSI-RS resource or an SSB.

Optionally, the message for activating the one or more secondary cells and the message for activating the TRS are carried through a third MAC CE.

Optionally, the third MAC CE includes information about one or more activated secondary cells and identities of CSI-RS resource sets sequentially associated with each of the one or more activated secondary cells.

Optionally, the third MAC CE further includes the number of the one or more first bursts and/or the number of the one or more second bursts.

Optionally, the third MAC CE further includes a transmission configuration indication identity and/or a bandwidth identity; wherein the transmission configuration indication identity is associated with a CSI-RS resource or an SSB.

In an embodiment of the present disclosure, a secondary cell activation apparatus is provided, including: an activation message receiving circuity configured to receive a message for activating one or more secondary cells and a message for activating a TRS, wherein the TRS corresponds to one or more first bursts and one or more second bursts, and a time-domain gap exists between the first burst and the second burst; an activation preparing circuity configured to receive the TRS for AGC adjustment and finer synchronization; and an activating circuity configured to activate the one or more secondary cells.

In an embodiment of the present disclosure, a secondary cell activation apparatus is provided, including: an activation message transmitting circuity configured to transmit to a terminal a message for activating one or more secondary cells and a message for activating a TRS, to make the terminal receive the TRS for AGC adjustment and finer synchronization and activate the one or more secondary cells; wherein the TRS corresponds to one or more first bursts and one or more second bursts, and a time-domain gap exists between the first burst and the second burst.

In an embodiment of the present disclosure, a storage medium having computer instructions stored therein is provided, wherein when the computer instructions are executed by a processor, any one of the above methods is performed.

In an embodiment of the present disclosure, a terminal which includes the above secondary cell activation apparatus or includes a memory and a processor is provided, wherein the memory has computer instructions stored therein, and when the processor executes the computer instructions, any one of the above methods is performed.

In an embodiment of the present disclosure, a network device which includes the above secondary cell activation apparatus or includes a memory and a processor is provided, wherein the memory has computer instructions stored therein, and when the processor executes the computer instructions, any one of the above methods is performed.

Embodiments of the present disclosure may provide following advantages.

In the embodiments of the present disclosure, a secondary cell activation method is provided, including: receiving a message for activating one or more secondary cells and a message for activating a TRS, wherein the TRS corresponds to one or more first bursts and one or more second bursts, and a time-domain gap exists between the first burst and the second burst; receiving the TRS for AGC adjustment and finer synchronization; and activating the one or more secondary cells. Compared with existing techniques, the embodiments of the present disclosure provide a SCell activation method, which triggers a configuration method for a TRS pattern required when the UE performs the above operations, to assist the UE in quickly realizing SCell activation, which adapts to SCells in different scenarios. Therefore, a delay of the SCell activation may be shortened to improve resource utilization.

Further, the network may transmit the configuration information of the TRS to the LTE, thereby flexibly adjusting a time-domain resource structure of the TRS to save transmission resources.

Further, the configuration information of the TRS may be carried through MAC CE, and SCells and TRS may be activated respectively through two MAC CEs which may be carried through a same Physical Downlink Shared Channel (PDSCH).

Further, one MAC CE for activating one or more SCells may be also used for activating TRS simultaneously, or be used for indicating the configuration information of the TRS. That is, indication information may be added into the MAC CE that originally activates the one or more SCells to reduce signaling overhead and signaling interval, while the one or more SCells can also be quickly triggered for activation.

### BRIEF DESCRIPTION OF THE DRAWINGS

FIG. 1 is a time schematic diagram of SCell activation based on MAC-CE in the existing techniques;
FIG. 2 is a structural diagram of an SCell activation/deactivation MAC CE of 8 bits in the existing techniques;
FIG. 3 is a structural diagram of an SCell activation/deactivation MAC CE of 32 bits in the existing techniques;
FIG. 4 is a flow chart of a secondary cell activation method according to an embodiment;
FIG. 5 is a diagram of a time-domain resource corresponding to a TRS according to an embodiment;
FIG. 6 is a diagram of configuration information of a CSI-RS resource set according to an embodiment;
FIG. 7 is a diagram of configuration information of a CSI-RS resource set according to an embodiment;
FIG. 8 is a diagram of a second MAC CE according to an embodiment;
FIG. 9 is a diagram of a second MAC CE according to an embodiment;
FIG. 10 is a diagram of a second MAC CE according to an embodiment;
FIG. 11 is a diagram of a third MAC CE according to an embodiment;
FIG. 12 is a diagram of a third MAC CE according to an embodiment;
FIG. 13 is a diagram of a third MAC CE according to an embodiment;
FIG. 14 is a flow chart of a secondary cell activation method according to an embodiment;
FIG. 15 is a structural diagram of a secondary cell activation apparatus according to an embodiment; and
FIG. 16 is a structural diagram of a secondary cell activation apparatus according to an embodiment.

### DETAILED DESCRIPTION

As described in the background, a delay of SCell activation in the existing techniques is too long, resulting in a waste of resources.

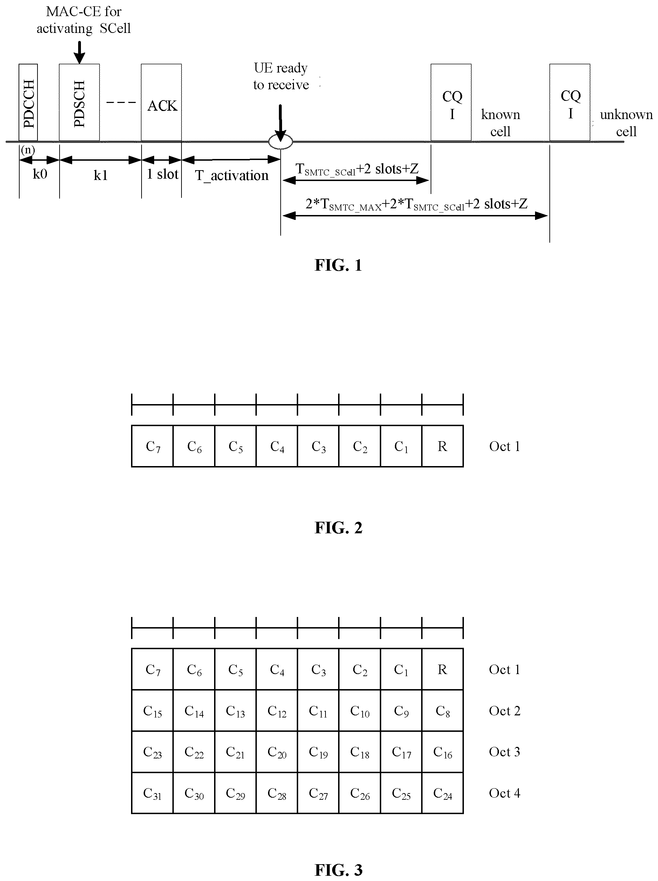

Specifically, referring to FIG. 1. FIG. 1 is a time schematic diagram of SCell activation based on MAC-CE in the existing techniques. A secondary cell activation procedure is based on MAC CE, and a secondary cell deactivation procedure may be also based on MAC CE. When a UE receives an activation command (carried by a Physical downlink control channel (PDCCH)) in a slot with a sequence number n, the activation command indicates to receive a PDSCH including a MAC CE in slot (n+k0), and feed back Acknowledge character (ACK) in a slot of a termination slot of the PDSCH (i.e., a termination slot of k0) plus k1. Starting from slot n, the UE is required to complete SCell activation and deactivation in slot (*n* + [T_{HARQ} + T_{activation_time} + T_{CSI_Reporting}]). T_{HARQ} is a time for the UE receiving the PDSCH and transmitting the ACK, T_{CSI_Reporting} is a time for reporting CSI, and T_{activation_time} is a delay of the SCell activation. If the SCell is known and belongs to a FR1 frequency band (with a frequency range of 450MHz-6GHz, also known as a sub 6GHz frequency band), T_{activation_time} is determined as follows. For a known cell, the UE is ready to receive a message for activating the SCell at a time point as shown in FIG. 1, and difference cells have different delays of the SCell activation. Specifically, T_{activation_time} = T_{SMTC_SCell} +2slots+Z. For a known cell, the delay of SCell activation T_{activation_time} = 2*T _{SMTC_MAX} +2*T _{SMTC_SCell} + 2slots+Z, where a value of Z depends on cells, and may be referred to existing standards. Calculation methods of the delay for the FR1 frequency band and an FR2 frequency band (with a frequency range of 24250MHz - 52600MHz, also known as Above-6GHz or millimeter wave) are different. Time points when the known cell and an unknown cell actually receive the message for activating the one or more SCells are determined by time points when they each receive Channel Quality Indication (CQI).

Length of an MAC-CE used for secondary cell activation and deactivation is fixed at 8 bits or 32 bits, as shown in FIGs. 2 and 3. FIG. 2 is a structural diagram of an SCell activation/deactivation MAC CE of 8 bits in the existing techniques. The MAC CE includes an octet (Oct), recorded as Oct1. The 8 bits include 7 bits of C field and 1 bit of R field. During a configuration procedure of SCells, a system may allocate corresponding index values to different secondary cells. The 7 C fields in the MAC CE (represented by C1 to C7 in FIG. 2) are used to indicate an activation/deactivation state of the corresponding secondary cell. When a value of C1 is set to 1, it means that the secondary cell with an index value 1 is activated; when a value of C2 is set to 1, it means that the secondary cell with an index value 2 is activated; and when the value of C1 is set to 0, it means that the secondary cell with the index value 1 is deactivated. The R field (indicated by R in FIG. 2) in the MAC CE is used as a reserved bit usually with a value of 0. FIG. 3 is a structural diagram of an SCell activation/deactivation MAC CE of 32 bits in the existing techniques. The MAC CE includes four octets, denoted as Oct1 to Oct4. The 31 C fields (indicated by C₁ to C₃₁ in FIG. 3) in the MAC CE are used to indicate an activation/deactivation state of the corresponding secondary cell. A specific indication method can be set with reference to FIG. 2. The R field (denoted as R in FIG. 3) is used as a reserved bit usually with a value of 0.

New Radio (NR) TRS is also a CSI-RS. When TRS-info in CSI-RS configuration information of a Radio Resource Control (RRC) signaling parameter is set to 1, it is the TRS. When the TRS is used for the LTE receiving downlink data transmission, CSI-RS is measured to track a time/frequency offset, so as to track and compensate for the time offset and frequency offset.

For the FR1 frequency band and the FR2 frequency band, time-frequency resources of TRS have following characteristics (see standard 38.214 for details). The TRS is a Non-Zero Power Channel State Information Reference Signal (NZP-CSI-RS)-Resource group consisting of four periodic NZP-CSI-RS resources, and may be configured with a parameter trs-Info. The group may be distributed in two consecutive slots, two CSI-RS resources are mapped in each slot, and the two CSI-RS resources are 4 symbols with a fixed time-domain interval. For example, in a frequency domain range 1, two symbols occupied in one slot may be {4, 8}, {5, 9}, or {6,10} f). Alternatively, the group may be in 1 slot with two CSI-RS resources mapped therein, and the two CSI-RS resources are 2 symbols with a fixed time-domain interval. The above four symbols in the two slots or the two symbols in one slot are called a burst. Each CSI-RS resource has a port of 1 (1-port), a port density of 3 (density-3), and bandwidth of min {52, BWP size} or equal to a Bandwidth Part (BWP) size.

In the existing techniques, the delay of SCell activation is too long. There have been proposals of transmitting a temporary reference signal to facilitate the LTE to perform AGC adjustment and finer synchronization to save a delay of waiting for SSB. However, inventors found through research that when the secondary cell is in different situations (for example, SCell is in FR1 or FR2, SCell is a known cell or an unknown cell, or whether there are other activated cells in the FR where the SCell is located), numbers of TRS symbols required for AGC adjustment and finer synchronization are different, and required time intervals between AGC adjustment and finer synchronization are also different. However, in the existing techniques, time-domain positions occupied by the TRS are relatively fixed, and thus it is impossible to adaptively configure different TRS patterns to adapt to the AGC adjustment and finer synchronization operations required for quick SCell activation in different scenarios.

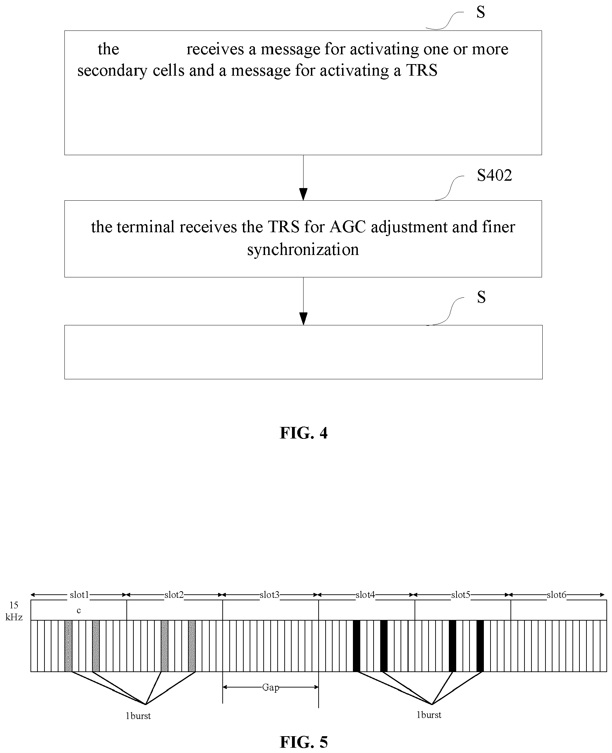

Referring to FIG. 4, FIG. 4 is a flow chart of a secondary cell activation method according to an embodiment. The method may be performed by a terminal, such as a LTE, and includes S401 to S403 which are described in detail below.

In S401, the terminal receives a message for activating one or more secondary cells and a message for activating a TRS, wherein the TRS corresponds to one or more first bursts and one or more second bursts, and a time-domain gap exists between the first burst and the second burst.

In S402, the terminal receives the TRS for AGC adjustment and finer synchronization.

In S403, the terminal activates the one or more secondary cells.

In the embodiments, when a base station transmits the message for activating the one or more secondary cells (SCells) to the UE, AGC adjustment and finer time/frequency synchronization (also called finer synchronization) are performed through the TRS. The finer synchronization realizes time/frequency synchronization between the UE and a network device (such as the base station). In a 5G NR system, the finer synchronization is realized through a Secondary Synchronization Signal (SSS), and a specific implementation method can be found in existing standards for 5G NR. Optionally, the message for activating the TRS and the message for activating the one or more secondary cells are carried on a same PDSCH.

Specifically, if the network device (hereinafter taking the base station as an example) needs to activate the one or more SCells, it transmits the message for activating the one or more secondary cells and the message for activating the TRS to the UE. A pattern (or structure) of a time-domain resource corresponding to the activated TRS includes N bursts, a time-domain gap and M bursts, where the N bursts before the time-domain gap are recorded as N first bursts, and bursts after the time-domain gap are recorded as second bursts. Values of M and N are positive integers greater than or equal to 1.

The burst corresponds to 2 symbols in 1 slot or 4 symbols in 2 slots.

Optionally, after receiving the message for activating the TRS, the UE uses one of a time-domain resource corresponding to the first burst and a time-domain resource corresponding to the second burst to perform AGC adjustment, and uses the other of the time-domain resource corresponding to the first burst and the time-domain resource corresponding to the second burst to perform finer synchronization, based on a time-domain structure corresponding to the TRS. After completing the AGC adjustment and the finer synchronization, the LTE activates the one or more secondary cells according to the existing standards.

Optionally, the TRS signal is a non-periodic signal.

From above, the embodiments of the present disclosure provide a SCell activation method, which triggers a configuration method for a TRS pattern required when the UE performs the above operations, to assist the UE in quickly realizing SCell activation, which adapts to SCells in different scenarios.

In some embodiments, said receiving the TRS in S402 in FIG. 4 includes: receiving the TRS based on configuration information of the TRS, wherein the configuration information of the TRS includes at least one or more of following parameters: a number of the one or more first bursts, a number of the one or more second bursts, or length of the time-domain gap.

The configuration information of the TRS is information used to determine a pattern (or structure) of the time-domain resource corresponding to the TRS. The configuration information may be set by a standard or configured by a high-layer signaling.

Optionally, the number of the one or more first bursts, the number of the one or more second bursts, and the length of the time-domain gap are preset values.

That is, specific values of M and N may be fixed preset values which may be determined according to a standard or configured by a high-layer signaling. For example, the pattern of the time-domain resource corresponding to the TRS is 1bursts+gap+1burst, 2bursts+gap+1burst, 2bursts+gap+2bursts, or 3burst+gap+1 burst. The length of the time-domain gap is fixed. Referring to FIG. 5, FIG. 5 is a diagram of a time-domain resource corresponding to a TRS according to an embodiment. The TRS includes 1burst+gap+1burst, the length of the gap is 1 slot, and each burst includes 4 symbols in two slots.

In some embodiments, still referring to FIG. 4, before receiving the message for activating the one or more secondary cells and the message for activating the TRS in S401, the method further includes: receiving the configuration information of the TRS, wherein the configuration information of the TRS includes the number of the one or more first bursts and the number of the one or more second bursts.

That is, the configuration information of the TRS may also be transmitted by the base station to the UE. The base station may configure a time-domain resource structure of the TRS to be activated currently for the LTE before activating the TRS, so that the time-domain resource structure of the TRS can be flexibly adjusted according to a need of each activated TRS to save transmission resources.

For example, the structure of the TRS is N burst + fixed/configurable time domain gap length (gap length) + M burst, where N=1 or 2 or 3, M=1 or 2. When the length of the gap is fixed, such as when it is set to 1 or 2 slots, there is no need to configure the length of the time-domain gap.

Alternatively, the configuration information of the TRS may also include the length of the time-domain gap, so that the length of the time-domain gap is configurable.

In some embodiments, the network may transmit the configuration information of the TRS to the UE, thereby flexibly adjusting the time-domain resource structure of the TRS to save transmission resources.

In some embodiments, the configuration information of the TRS includes configuration information of a CSI-RS resource set, and said receiving the configuration information of the TRS includes: receiving the configuration information of the CSI-RS resource set; determining the number of the one or more first bursts based on a number of CSI-RS resources in the configuration information of the CSI-RS resource set.

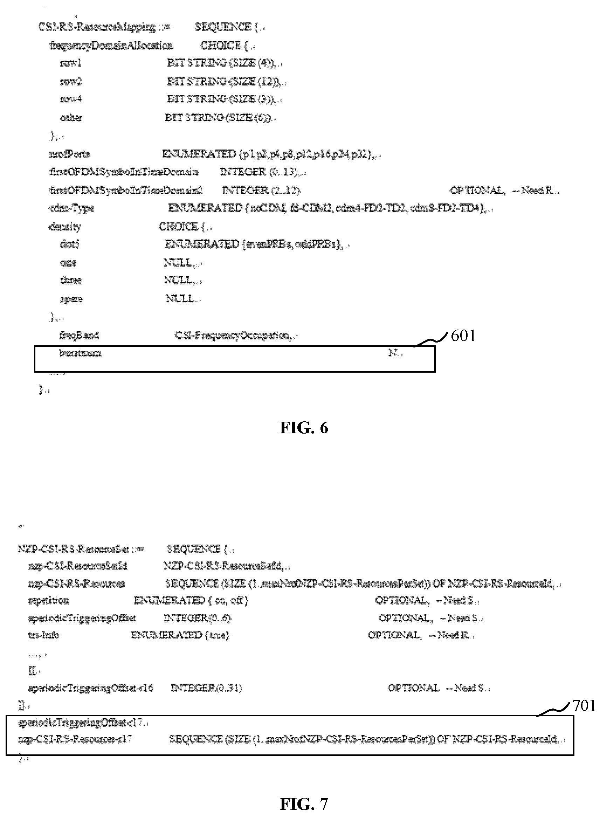

That is, the configuration information of the TRS may be carried through the configuration information of the CSI-RS resource set. For example, the value of N is carried in the configuration information of the CSI-RS resource set. Referring to FIG. 6, FIG. 6 is a diagram of configuration information of a CSI-RS resource set according to an embodiment. In block 601, a parameter 'burstnum' is used to indicate the value of N.

Optionally, the configuration information of the CSI-RS resource set further indicates a number of the one or more second bursts and/or the time-domain gap. That is, the configuration information of the CSI-RS resource set as shown in FIG. 6 carries the number of the one or more second bursts (i.e., the value of M) and/or a parameter corresponding to the time-domain gap and a value corresponding to the parameter.

In some embodiments, the configuration information of the CSI-RS resource set includes a start slot of a burst following the time-domain gap and the number of the CSI-RS resources in the CSI-RS resource set, and following receiving the configuration information of the CSI-RS resource set, the method further includes: determining the number of the one or more second bursts based on the number of the CSI-RS resources; and determining the length of the time-domain gap based on the start slot of the burst following the time-domain gap and the number of the CSI-RS resources.

Referring to FIG. 7, FIG. 7 is a diagram of configuration information of a CSI-RS resource set according to an embodiment. When configuring the CSI-RS resource set in a high-layer signaling (or high-layer parameter), the value of N is indicated through the CSI-RS resource (corresponding to a parameter nzp-CSI-RS-Resources). For example, nzp-CSI-RS-Resources includes 4×N (or 2×N) nzp-CSI-RS resources, from which the value of N can be obtained. The high-layer parameter aperiodicTriggeringOffset is used to indicate the start slot of the burst disposed firstly in TRS. Two new parameters aperiodicTriggeringOffset-r17 and nzp-CSI-RS-Resources-r17 are added to a signaling for configuring the CSI-RS resource set (see box 701 in FIG. 7). aperiodicTriggeringOffset-r17 indicates a start slot of the burst following the time-domain gap in the TRS, and nzp-CSI-RS-Resources-r17 indicates a number of M. For example, nzp-CSI-RS-Resources-r17 indicates that the CSI-RS resource (nzp-CSI -RS-Resources) includes 4×M (or 2×M) nzp-CSI-RS resources, so that the LTE can determine the value of M.

For example, the value of N is implicitly obtained by a number of occupied slots (expressed by Q) represented by the number of nzp-CSI-RS resources included in the parameter nzp-CSI-RS-Resources. Gap is obtained by subtracting aperiodicTriggeringOffset and Q from aperiodicTriggeringOffset-r17. A number of bursts configured in nzp-CSI-RS-Resources-r17 (i.e., the value of M) is obtained implicitly by a number of occupied slots represented by the number of resources in nzp-CSI-RS-Resources. The start position of the second burst is determined according to aperiodicTriggeringOffset-r17.

In some embodiments, the configuration information of the TRS is carried by MAC CE. That is, the number of the one or more first bursts, the number of the one or more second bursts, and the length of the time-domain gap may all be carried through a MAC CE, and configured by the base station to the UE.

In some embodiments, the message for activating the one or more secondary cells is carried through a first MAC CE, and the message for activating the TRS is carried through a second MAC CE.

Specifically, when two MAC CEs are used to activate one or more SCells and TRS respectively, the MAC CE that activates the one or more SCells is the same as the existing techniques. There is currently no relevant solution for a design of the MAC CE that activates the TRS (i.e., the second MAC CE). Following solutions may be adopted.
1. The second MAC CE is used to activate the TRS. The second MAC CE includes an identity (ID) of the CSI-RS resource set and an ID of an associated serving cell.
2. The second MAC CE is used to activate the TRS. The second MAC CE includes the ID of the CSI-RS resource set and the ID of the associated serving cell, and also includes the number of the first bursts and/or the number of the second bursts.
3. The second MAC CE is used to activate the TRS. The second MAC CE includes the ID of the CSI-RS resource set and the ID of the associated serving cell, and also includes a transmission configuration indication ID and/or Bandwidth Part ID (BWP ID).
4. The second MAC CE is used to activate the TRS. The second MAC CE includes the ID of the CSI-RS resource set and the ID of the associated serving cell, and also includes the number of the first bursts and/or the number of the second bursts, and the transmission configuration indication ID and/or the BWP ID. The transmission configuration indication ID is associated with a CSI-RS resource or an SSB.

If the second MAC CE does not include the BWP ID, it may be associated by default to a first entered BWP configured in the serving cell after activation, which is determined by the existing standard.

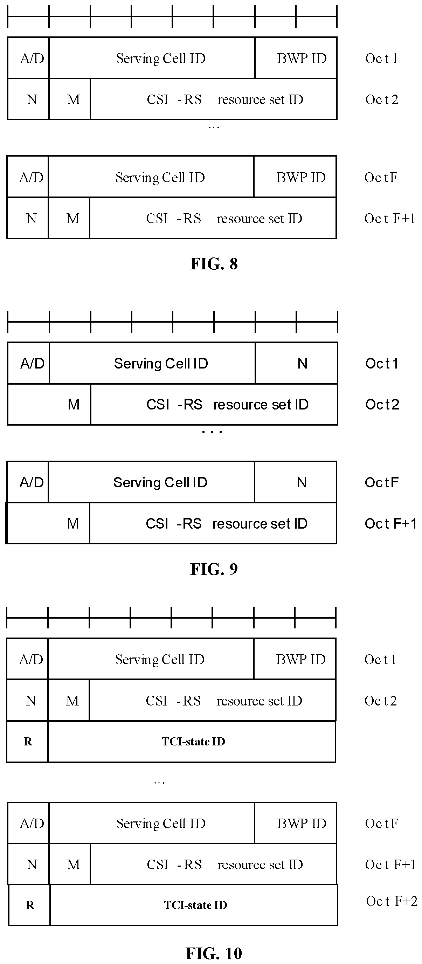

Referring to FIG. 8 to FIG. 10, FIG. 8 to FIG. 10 provide schematic diagrams of three types of second MAC CEs, but cannot cover structures of all possible second MAC CEs. A/D bit is used to indicate whether the second MAC CE carries information such as N/M/CSI-RS resource set ID, and N and M bits indicate values of N and M in a time-domain resource structure corresponding to the TRS. Oct1, Oct2, ..., OctF, OctF+1 represent 1 to F+1 Octs, and F is a positive integer. TCI-state ID represents the transmission configuration indication ID, and a value of this bit can be used to determine that the second MAC CE is associated with the CSI-RS resource or the SSB, so as to decode the second MAC CE by the associated CSI-RS resource or SSB, or carry other information. R represents a reserved bit.

In the embodiments, the one or more SCells and TRS are respectively activated through two MAC CEs which may be carried through a same PDSCH.

In some embodiments, the message for activating the one or more secondary cells and the message for activating the TRS are carried through a third MAC CE. That is, when one MAC CE (i.e., a third MAC CE) is used to activate the one or more SCells and the TRS simultaneously, a following design may be adopted.

This MAC CE includes SCell activation information (may be referred to a MAC CE design of SCell activation in the existing techniques), and identities of CSI-RS resource sets sequentially associated with each of the one or more activated secondary cells. Optionally, the third MAC CE includes information about one or more activated secondary cells and identities of CSI-RS resource sets sequentially associated with each of the one or more activated secondary cells. Optionally, the third MAC CE further includes the number of the one or more first bursts and/or the number of the one or more second bursts. Optionally, the third MAC CE further includes a transmission configuration indication identity and/or a bandwidth identity, where the transmission configuration indication identity is associated with a CSI-RS resource or an SSB.

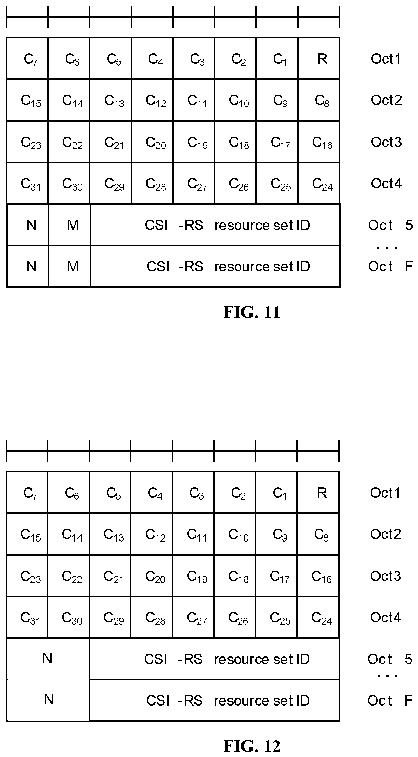

Referring to FIG. 11 to FIG. 13, FIG. 11 to FIG. 13 provide schematic diagrams of three types of third MAC CEs, but cannot cover structures of all possible third MAC CEs. C1 to C31 bits are 31 C fields in the MAC CE as shown in FIG. 3. Information about other parameters may be referred to the descriptions in FIG. 8 to FIG. 10, and is not repeated here.

In some embodiments, the one or more SCells and TRS are simultaneously activated through one MAC CE, and the configuration information of the TRS may also be indicated. That is, indication information may be added to the MAC CE that originally activates the one or more SCells to reduce signaling overhead and a signaling interval, while the one or more SCells can also be quickly triggered for activation.

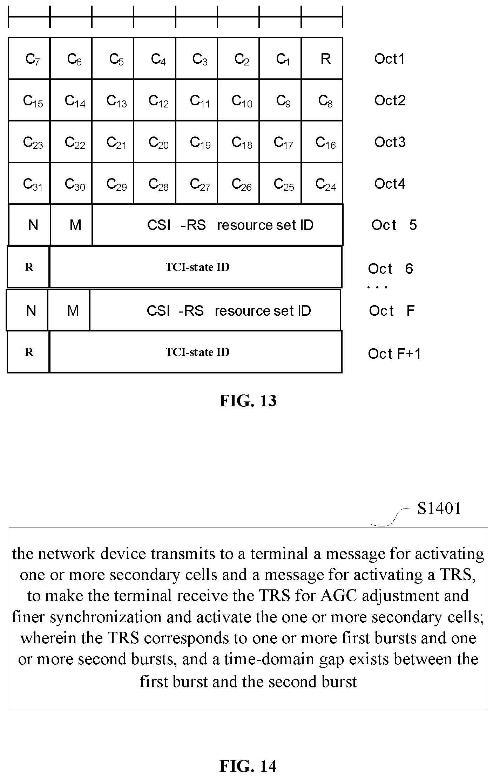

Referring to FIG. 14, FIG. 14 is a flow chart of a secondary cell activation method according to an embodiment. The method is performed by a network device (such as a base station or an Access Point (AP)) to trigger a terminal (such as a UE) to activate one or more SCells. The methods include S1401.

In S1401, the network device transmits to a terminal a message for activating one or more secondary cells and a message for activating a TRS, to make the terminal receive the TRS for AGC adjustment and finer synchronization and activate the one or more secondary cells; wherein the TRS corresponds to one or more first bursts and one or more second bursts, and a time-domain gap exists between the first burst and the second burst.

In some embodiments, the terminal receives the TRS based on configuration information of the TRS, wherein the configuration information of the TRS includes at least one or more of following parameters: a number of the one or more first bursts, a number of the one or more second bursts, or length of the time-domain gap.

In some embodiments, the number of the one or more first bursts, the number of the one or more second bursts, and the length of the time-domain gap are preset values.

In some embodiments, prior to transmitting to the terminal the message for activating the one or more secondary cells and the message for activating the TRS, the method further includes: transmitting to the terminal the configuration information of the TRS, wherein the configuration information of the TRS includes the number of the one or more first bursts and the number of the one or more second bursts.

In some embodiments, the configuration information of the TRS further includes the length of the time-domain gap.

In some embodiments, the configuration information of the TRS includes configuration information of a CSI-RS resource set, and said transmitting to the terminal the configuration information of the TRS includes: transmitting to the terminal the configuration information of the CSI-RS resource set, to make the terminal determine the number of the one or more first bursts based on a number of CSI-RS resources in the configuration information of the CSI-RS resource set.

In some embodiments, the configuration information of the CSI-RS resource set further indicates the number of the one or more second bursts and/or the time-domain gap.

In some embodiments, the configuration information of the CSI-RS resource set includes a start slot of a burst following the time-domain gap and the number of the CSI-RS resources in the CSI-RS resource set, to make the terminal determine the number of the one or more second bursts based on the number of the CSI-RS resources, and determine the length of the time-domain gap based on the start slot of the burst following the time-domain gap and the number of the CSI-RS resources, after receiving the configuration information of the CSI-RS resource set.

In some embodiments, the configuration information of the TRS is carried by MAC CE.

In some embodiments, the message for activating the one or more secondary cells is carried through a first MAC CE, and the message for activating the TRS is carried through a second MAC CE; wherein the second MAC CE includes a CSI-RS resource set identity and an identity of an associated serving cell.

In some embodiments, the second MAC CE further includes the number of the one or more first bursts and/or the number of the one or more second bursts.

In some embodiments, the second MAC CE further includes a transmission configuration indication identity and/or a bandwidth identity; wherein the transmission configuration indication identity is associated with a CSI-RS resource or an SSB.

In some embodiments, the message for activating the one or more secondary cells and the message for activating the TRS are carried through a third MAC CE.

In some embodiments, the third MAC CE includes information about one or more activated secondary cells and identities of CSI-RS resource sets sequentially associated with each of the one or more activated secondary cells.

In some embodiments, the third MAC CE further includes the number of the one or more first bursts and/or the number of the one or more second bursts.

In some embodiments, the third MAC CE further includes a transmission configuration indication identity and/or a bandwidth identity; wherein the transmission configuration indication identity is associated with a CSI-RS resource or an SSB.

The secondary cell activation method performed by the network device in FIG. 14 corresponds to the secondary cell activation method performed by the terminal in FIG. 4. More details of working principles and working modes in FIG. 14 can be referred to related descriptions in FIG. 4, and are not repeated here.

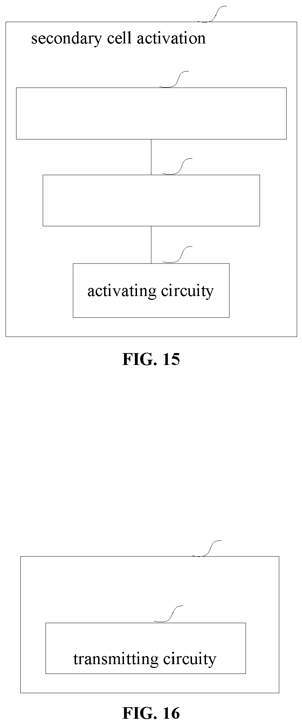

Referring to FIG. 15, FIG. 15 is a block diagram of a secondary cell activation apparatus 150 according to an embodiment. The secondary cell activation apparatus 150 includes: an activation message receiving circuity 1501 configured to receive a message for activating one or more secondary cells and a message for activating a TRS, wherein the TRS corresponds to one or more first bursts and one or more second bursts, and a time-domain gap exists between the first burst and the second burst; an activation preparing circuity 1502 configured to receive the TRS for AGC adjustment and finer synchronization; and an activating circuity 1503 configured to activate the one or more secondary cells.

More details of working principles and working modes of the secondary cell activation apparatus 150 can be referred to related descriptions of the method in FIG. 4, and are not repeated here.

In some embodiments, the secondary cell activation apparatus 150 may correspond to a chip with a secondary cell activation function in a terminal, or to a chip with a data processing function, such as a System-On-Chip (SOC) or a baseband chip, or to a chip module including a chip with a secondary cell activation function in the terminal, or to a chip module including a chip with a data processing function, or to the terminal.

Referring to FIG. 16, FIG. 16 is a structural diagram of a secondary cell activation apparatus 160 according to an embodiment. The secondary cell activation apparatus 160 includes: an activation message transmitting circuity 1601 configured to transmit to a terminal a message for activating one or more secondary cells and a message for activating a TRS, to make the terminal receive the TRS for AGC adjustment and finer synchronization and activate the one or more secondary cells; wherein the TRS corresponds to one or more first bursts and one or more second bursts, and a time-domain gap exists between the first burst and the second burst.

More details of working principles and working modes of the secondary cell activation apparatus 160 can be referred to related descriptions of the method in FIG. 14, and are not repeated here.

In some embodiments, the secondary cell activation apparatus 160 may correspond to a chip with a secondary cell activation function in a network device, or to a chip with a data processing function, such as an SOC or a baseband chip, or to a chip module including a chip with a secondary cell activation function in the network device, or to a chip module including a chip with a data processing function, or to the network device.

Each module/unit of each apparatus and product described in the above embodiments may be a software module/unit or a hardware module/unit, or may be a software module/unit in part, and a hardware module/unit in part.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a storage medium having computer instructions stored therein is provided, wherein when the computer instructions are executed by a processor, the method as shown in FIG. 4 or FIG. 14 is performed. In some embodiments, the storage medium may be a computer-readable storage medium, for example, including a non-volatile or a non-transitory memory, or including a compact disc, a hard disk drive or a solid state drive.

In an embodiment of the present disclosure, a terminal including the secondary cell activation apparatus 150 as shown inn FIG. 15 or including a memory and a processor is provided, wherein the memory has computer instructions stored therein, and when the processor executes the computer instructions, the secondary cell activation method as shown in FIG. 4 is performed.

In an embodiment of the present disclosure, a network device including the secondary cell activation apparatus 160 as shown inn FIG. 16 or including a memory and a processor is provided, wherein the memory has computer instructions stored therein, and when the processor executes the computer instructions, the secondary cell activation method as shown in FIG. 14 is performed.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A secondary cell activation method, **characterized by** comprising:
receiving a message for activating one or more secondary cells and a message for activating a Tracking Reference Signal (TRS), wherein the TRS corresponds to one or more first bursts and one or more second bursts, and a time-domain gap exists between the first burst and the second burst;
receiving the TRS for AGC adjustment and finer synchronization; and
activating the one or more secondary cells.

2. The method according to claim 1, **characterized in that** said receiving the TRS comprises:
receiving the TRS based on configuration information of the TRS, wherein the configuration information of the TRS comprises at least one or more of following parameters: a number of the one or more first bursts, a number of the one or more second bursts, or length of the time-domain gap.

3. The method according to claim 2, **characterized in that** the number of the one or more first bursts, the number of the one or more second bursts, and the length of the time-domain gap are preset values.

4. The method according to claim 2, **characterized in that** prior to receiving the message for activating the one or more secondary cells and the message for activating the TRS, the method further comprises:
receiving the configuration information of the TRS, wherein the configuration information of the TRS comprises the number of the one or more first bursts and the number of the one or more second bursts.

5. The method according to claim 4, **characterized in that** the configuration information of the TRS further comprises the length of the time-domain gap.

6. The method according to claim 4 or 5, **characterized in that** the configuration information of the TRS comprises configuration information of a Channel State Information Reference Signal (CSI-RS) resource set, and said receiving the configuration information of the TRS comprises:
receiving the configuration information of the CSI-RS resource set; and
determining the number of the one or more first bursts based on a number of CSI-RS resources in the configuration information of the CSI-RS resource set.

7. The method according to claim 6, **characterized in that** the configuration information of the CSI-RS resource set further indicates the number of the one or more second bursts and/or the time-domain gap.

8. The method according to claim 7, **characterized in that** the configuration information of the CSI-RS resource set comprises a start slot of a burst following the time-domain gap and the number of the CSI-RS resources in the CSI-RS resource set, and following receiving the configuration information of the CSI-RS resource set, the method further comprises:
determining the number of the one or more second bursts based on the number of the CSI-RS resources; and
determining the length of the time-domain gap based on the start slot of the burst following the time-domain gap and the number of the CSI-RS resources.

9. The method according to claim 4, **characterized in that** the configuration information of the TRS is carried by Media Access Control Control Element (MAC CE).

10. The method according to claim 9, **characterized in that** the message for activating the one or more secondary cells is carried through a first MAC CE, and the message for activating the TRS is carried through a second MAC CE;
wherein the second MAC CE comprises a CSI-RS resource set identity and an identity of an associated serving cell.

11. The method according to claim 10, **characterized in that** the second MAC CE further comprises the number of the one or more first bursts and/or the number of the one or more second bursts.

12. The method according to claim 10 or 11, **characterized in that** the second MAC CE further comprises a transmission configuration indication identity and/or a bandwidth identity;
wherein the transmission configuration indication identity is associated with a CSI-RS resource or a Synchronization Signal Block (SSB).

13. The method according to claim 9, **characterized in that** the message for activating the one or more secondary cells and the message for activating the TRS are carried through a third MAC CE.

14. The method according to claim 13, **characterized in that** the third MAC CE comprises information about one or more activated secondary cells and identities of CSI-RS resource sets sequentially associated with each of the one or more activated secondary cells.

15. The method according to claim 14, **characterized in that** the third MAC CE further comprises the number of the one or more first bursts and/or the number of the one or more second bursts.

16. The method according to claim 14 or 15, **characterized in that** the third MAC CE further comprises a transmission configuration indication identity and/or a bandwidth identity;
wherein the transmission configuration indication identity is associated with a CSI-RS resource or an SSB.

17. A secondary cell activation method, **characterized by** comprising:
transmitting to a terminal a message for activating one or more secondary cells and a message for activating a Tracking Reference Signal (TRS), to make the terminal receive the TRS for AGC adjustment and finer synchronization and activate the one or more secondary cells;
wherein the TRS corresponds to one or more first bursts and one or more second bursts, and a time-domain gap exists between the first burst and the second burst.

18. The method according to claim 17, **characterized in that** the terminal receives the TRS based on configuration information of the TRS, wherein the configuration information of the TRS comprises at least one or more of following parameters: a number of the one or more first bursts, a number of the one or more second bursts, or length of the time-domain gap.

19. The method according to claim 18, **characterized in that** the number of the one or more first bursts, the number of the one or more second bursts, and the length of the time-domain gap are preset values.

20. The method according to claim 18, **characterized in that** prior to transmitting to the terminal the message for activating the one or more secondary cells and the message for activating the TRS, the method further comprises:
transmitting to the terminal the configuration information of the TRS, wherein the configuration information of the TRS comprises the number of the one or more first bursts and the number of the one or more second bursts.

21. The method according to claim 20, **characterized in that** the configuration information of the TRS further comprises the length of the time-domain gap.

22. The method according to claim 20 or 21, **characterized in that** the configuration information of the TRS comprises configuration information of a Channel State Information Reference Signal (CSI-RS) resource set, and said transmitting to the terminal the configuration information of the TRS comprises:
transmitting to the terminal the configuration information of the CSI-RS resource set, to make the terminal determine the number of the one or more first bursts based on a number of CSI-RS resources in the configuration information of the CSI-RS resource set.

23. The method according to claim 22, **characterized in that** the configuration information of the CSI-RS resource set further indicates the number of the one or more second bursts and/or the time-domain gap.

24. The method according to claim 23, **characterized in that** the configuration information of the CSI-RS resource set comprises a start slot of a burst following the time-domain gap and the number of the CSI-RS resources in the CSI-RS resource set, to make the terminal determine the number of the one or more second bursts based on the number of the CSI-RS resources, and determine the length of the time-domain gap based on the start slot of the burst following the time-domain gap and the number of the CSI-RS resources, after receiving the configuration information of the CSI-RS resource set.

25. The method according to claim 20, **characterized in that** the configuration information of the TRS is carried by Media Access Control Control Element (MAC CE).

26. The method according to claim 25, **characterized in that** the message for activating the one or more secondary cells is carried through a first MAC CE, and the message for activating the TRS is carried through a second MAC CE;
wherein the second MAC CE comprises a CSI-RS resource set identity and an identity of an associated serving cell.

27. The method according to claim 26, **characterized in that** the second MAC CE further comprises the number of the one or more first bursts and/or the number of the one or more second bursts.

28. The method according to claim 26 or 27, **characterized in that** the second MAC CE further comprises a transmission configuration indication identity and/or a bandwidth identity;
wherein the transmission configuration indication identity is associated with a CSI-RS resource or a Synchronization Signal Block (SSB).

29. The method according to claim 25, **characterized in that** the message for activating the one or more secondary cells and the message for activating the TRS are carried through a third MAC CE.

30. The method according to claim 29, **characterized in that** the third MAC CE comprises information about one or more activated secondary cells and identities of CSI-RS resource sets sequentially associated with each of the one or more activated secondary cells.

31. The method according to claim 30, **characterized in that** the third MAC CE further comprises the number of the one or more first bursts and/or the number of the one or more second bursts.

32. The method according to claim 30 or 31, **characterized in that** the third MAC CE further comprises a transmission configuration indication identity and/or a bandwidth identity;
wherein the transmission configuration indication identity is associated with a CSI-RS resource or an SSB.

33. A secondary cell activation apparatus, **characterized by** comprising:
an activation message receiving circuity configured to receive a message for activating one or more secondary cells and a message for activating a Tracking Reference Signal (TRS), wherein the TRS corresponds to one or more first bursts and one or more second bursts, and a time-domain gap exists between the first burst and the second burst;
an activation preparing circuity configured to receive the TRS for AGC adjustment and finer synchronization; and
an activating circuity configured to activate the one or more secondary cells.

34. A secondary cell activation apparatus, **characterized by** comprising:
an activation message transmitting circuity configured to transmit to a terminal a message for activating one or more secondary cells and a message for activating a Tracking Reference Signal (TRS), to make the terminal receive the TRS for AGC adjustment and finer synchronization and activate the one or more secondary cells;
wherein the TRS corresponds to one or more first bursts and one or more second bursts, and a time-domain gap exists between the first burst and the second burst.

35. A storage medium having computer instructions stored therein, **characterized in that** when the computer instructions are executed by a processor, the method of any one of claims 1 to 16 or the method of any one of claims 17 to 32 is performed.

36. A terminal, comprising the apparatus of claim 33, or comprising a memory and a processor, **characterized in that** the memory has computer instructions stored therein, and when the processor executes the computer instructions, the method of any one of claims 1 to 16 is performed.

37. A network device, comprising the apparatus of claim 34, or comprising a memory and a processor, **characterized in that** the memory has computer instructions stored therein, and when the processor executes the computer instructions, the method of claim 17 or 32 is performed.
